# EUROPÄISCHE PATENTSCHRIFT

(11) **EP 3 079 928 B1**
(45) Veröffentlichungstag und Bekanntmachung des Hinweises auf die Patenterteilung: **21.02.2018**
(21) Anmeldenummer: 14808510.3
(22) Anmeldetag: 04.12.2014
(51) Int. Cl.: B60G 11/18, B60G 17/02, B62D 21/11, B60G 11/20

(54) **AKTIV VERSTELLBARE RADAUFHÄNGUNG FÜR DIE RÄDER EINER ACHSE EINES KRAFTFAHRZEUGS**
ACTIVELY ADJUSTABLE WHEEL SUSPENSION FOR THE WHEELS OF AN AXLE OF A MOTOR VEHICLE
SUSPENSION ACTIVEMENT RÉGLABLE POUR LES ROUES D'UN ESSIEU DE VÉHICULE À MOTEUR

(30) Priorität: 09.12.2013 DE 102013020563
(43) Veröffentlichungstag der Anmeldung: 19.10.2016
(73) Patentinhaber: Audi AG, 85045 Ingolstadt (DE)
(72) Erfinder: GROEN, Matthias, 85053 Ingolstadt (DE); SCHMITT, Joachim, 85051 Ingolstadt (DE); LEIBL, Peter, 85077 Manching (DE)
(74) Vertreter: Reichert, Thomas Klaus
(86) Internationale Anmeldenummer: PCT/EP2014/003246
(87) Internationale Veröffentlichungsnummer: WO 2015/086133

(56) Entgegenhaltungen:
- WO-A1-00/38939
- WO-A1-97/46417
- WO-A1-2014/124721
- DE-A1-102009 051 469
- DE-A1-102011 105 547
- DE-B3-102006 061 984
- JP-A- S6 470 213
- US-A- 2 788 982
- US-A- 4 641 856

## Beschreibung

Die Erfindung betrifft eine aktiv verstellbare Radaufhängung für die Räder einer Achse eines Kraftfahrzeugs gemäß der im Oberbegriff des Patentanspruches 1 angegebenen Art.

Sogenannte aktive Systeme zur Aufbauberuhigung eines Kraftfahrzeugs sind hinreichend bekannt. In der Regel werden hierzu Drehaktuatoren zur Verdrehung eines Drehstabes verwendet. Durch das Aufbringen eines Moments auf den Drehstab werden aktive Kräfte gestellt, die die Radbewegung oder die Aufbaubewegung des Kraftfahrzeuges beeinflussen können.

Eine gattungsgemäße aktive verstellbare Radaufhängung für die hinteren Räder einer Achse eines Kraftfahrzeuges ist in der EP 2 389 299 offenbart. Hierbei ist jedes Rad der Achse über mehrere Radführungselemente an einem Hilfsrahmen gelagert und steht über seine Radführungselemente mit einem verstellbaren Drehstab in Wirkverbindung. Den in Kraftfahrzeugquerrichtung ausgerichteten Drehstäben ist jeweils ein - ebenfalls in Kraftfahrzeugquerrichtung ausgerichteter - Drehaktuator zugeordnet, über die Momente auf die Drehstäbe, aufbringbar sind, d.h. aktiv Kräfte gestellt werden um z.B. einer Wankbewegung entgegenzuwirken. Die beiden in Kraftfahrzeugquerrichtung ausgerichteten Drehaktuatoren sind in einem gemeinsamen Gehäuse untergebracht, welches sich mit einer Konsole an einem Querträger des Hilfsrahmens abstützt. Da die Anordnung der Drehstäbe, Drehaktuatoren und des Gehäuses relativ viel Bauraum beansprucht, wird Packageraum in Fahrzeuglängs- und Fahrzeugquerrichtung nicht optimal ausgenutzt.

Ein gattungsgemäße, sämtliche Merkmal des Oberbegriffs des Patentanspruches 1 aufweisend aktiv verstellbare Radaufhängung ist aus der DE 10 2006 061 984 B3 und der DE 10 2009 051 469 A1 bekannt.

Der Erfindung liegt die Aufgabe zugrunde, eine aktive verstellbare Radaufhängung für die Räder eines Kraftfahrzeuges gemäß der im Oberbegriff des Patentanspruches 1 angegebenen Art derart weiterzubilden, dass eine bauraumsparende Anordnung der für die aktive Radaufhängung notwendigen Komponenten gewährleistet ist.

Diese Aufgabe wird durch die kennzeichnenden Merkmale des Patentanspruches 1 und des Patentanspruches 3 in Verbindung mit ihren Oberbegriffsmerkmalen gelöst.

Die Unteransprüche bilden vorteilhafte Weiterbildungen der Erfindung.

In bekannter Art und Weise ist jedes Rad der aktiv verstellbaren Radaufhängung über mehrere Radführungselemente karosserieseitig angelenkt und jedes Rad der Achse steht mit einem karosserieseitig gelagerten, einen Drehstab aufweisenden Drehaktuator in Wirkverbindung. Weiterhin ist ein Steuergerät vorgesehen, über das die beiden Drehaktuatoren aktiv ansteuerbar, d.h. verstellbar, sind. Die karosserieseitig gelagerten Drehaktuatoren sowie die Drehstäbe der Drehaktuatoren sind in Kraftfahrzeuglängsrichtung ausgerichtet. Zur Momentenabstützung weisen die Drehaktuatoren jeweils mindestens eine in Kraftfahrzeugquerrichtung ausgerichtete Strebe auf, die karosserieseitig mittels Befestigungsmittel befestigt sind.

Da lediglich die Streben zur Momentenabstüztung in Kraftfahrzeugquerrichtung ausgerichtet sind, zeichnet sich die aktive Radaufhängung durch eine besonders bauraumsparende Anordnung aus.

Hierdurch ist gewährleistet, dass Kraftfahrzeuge mit einem konventionellen Drehstabstabilisator auf eine einfache Art und Weise schnell und kostengünstig mit einem aktiven Fahrwerk ausgestattet bzw. nachgerüstet werden können, da aufgrund dieser Anordnung und Ausgestaltung der Drehaktuatoren und Drehstäben, bei Wegfall des konventionellen Drehstabilisator der freiwerdende Bauraum ausreichend für die Anordnung dieser Komponenten ist.

Vorzugsweise erfolgt die karosserieseitige Anlenkung der Radführungselemente bzw. die karosserieseitige Lagerung/Befestigung der Drehaktuatoren/Streben der Drehaktuatoren an einem Hilfsrahmen. Der Hilfsrahmen weist hierzu zwei in Fahrzeuglängsrichtung ausgerichtete Längsträger, eine in Fahrzeugquerrichtung ausgerichtete hintere Quertraverse und eine in Fahrzeugquerrichtung ausgerichtete vordere Quertraverse auf. Die vordere Quertraverse ist dabei mit einem offenen Querschnitt ausgebildet, durch den eine in Kraftfahrzeugquerrichtung ausgerichtete Stabilisatorgasse gebildet ist. Zudem ist hierbei das Steuergerät in der Stabilisatorgasse angeordnet und mittels Befestigungsmittel an der vorderen Quertraverse befestigt. Diese Anordnung erweist sich als vorteilhaft, da durch die Positionierung des Steuergeräts in der Stabilisatorgasse eine bauraumsparende und vor äußeren Einflüssen geschützte Anordnung gewährleistet ist.

Erfindungsgemäß ist die Strebe eines Drehaktuators gehäuseförmig ausgebildet und das Steuergerät ist in die gehäuseförmig ausgebildete Strebe integriert. Die erfindungsgemäße Ausführungsform zeichnet sich durch ihre geringe Bauteilzahl und die damit verbundene schnellere und kostengünstigere Montage aus.

Alternativ weist die Strebe eines Drehaktuators einen Befestigungsabschnitt auf, an den das Steuergerät befestigbar ist. Diese Ausführungsform hat den Vorteil, dass eine einfache Montage gewährleistet ist.

Vorzugsweise ist für die karosserieseitige Montage wiederum ein Hilfsrahmen vorgesehen, der zwei in Fahrzeuglängsrichtung ausgerichtete Längsträger, eine in Fahrzeugquerrichtung ausgerichtete hintere Quertraverse und eine in Fahrzeugquerrichtung ausgerichtete vordere Quertraverse umfasst. Weiterhin weist die vordere Quertraverse wieder einen offenen Querschnitt auf, durch den eine in Kraftfahrzeugquerrichtung ausgerichtete Stabilisatorgasse gebildet ist. Hierbei sind die gehäuseförmig ausgebildet Strebe des einen Drehaktuators und das in der gehäuseförmig ausgebildeten Strebe integrierte Steuergerät bzw. die den Befestigungsabschnitt aufweisende Strebe des einen Drehaktuators und das am Befestigungsabschnitt befestigte Steuergerät sowie die Strebe des anderen Drehaktuators in der Stabilisatorgasse angeordnet und an der vorderen Quertraverse befestigt. Durch die Positionierung der Komponenten gehäuseförmige Strebe mit integrierten Steuergerät sowie der Strebe des anderen Drehaktuators in der Stabilisatorgasse, ist wieder eine geschützte und bauraumsparende Anordnung gewährleistet.

Gemäß einer anderen Ausführungsform der Erfindung sind die beiden Streben als ein einteiliges Gehäusebauteil ausgebildet, in das das Steuergerät integriert ist.

Vorteilhaft an dieser Ausführungsform ist, dass ein einheitliches Modul zur Verfügung gestellt, das anstelle eines konventionellen Stabilisators schnell montierbar ist.

Bevorzugt sind dabei das einteilige Gehäusebauteil und die Drehaktuatoren als eine einteilige Baueinheit ausgebildet. Alternativ sind das einteilige Gehäusebauteil und die Drehaktuatoren mehrteilig ausgebildet, wobei die Drehaktuatoren mittels Befestigungsmittel an dem einteiligen Gehäusebauteil befestigt sind.

In vorteilhafter Weise können die Befestigungsmittel dabei in einer Symmetrieebene des Drehaktuators liegen oder senkrecht dazu stehen. Damit ist es möglich, den linken Drehaktuator als Gleichteil auch auf der rechten Seite zu verwenden und umgekehrt.

Vorzugsweise ist für die karosserieseitige Montage wiederum ein Hilfsrahmen vorgesehen, der zwei in Fahrzeuglängsrichtung ausgerichtete Längsträger, eine in Fahrzeugquerrichtung ausgerichtete hintere Quertraverse und eine in Fahrzeugquerrichtung ausgerichtete vordere Quertraverse umfasst. Zudem ist die vordere Quertraverse wiederum mit einem offenen Querschnitt ausgebildet, die eine in Kraftfahrzeugquerrichtung ausgerichtete Stabilisatorgasse bildet. Hierbei ist das das Steuergerät sowie die beiden Drehaktuatoren aufnehmende Gehäusebauteil in der Stabilisatorgasse angeordnet und an der vorderen Quertraverse befestigt. In vorteilhafter Weise ist hierdurch gewährleistet, dass wirkenden Kräfte und Momente durch das gemeinsame Gehäusebauteil mit aufgenommen werden, d.h. eine unmittelbare Einleitung in den Hilfsrahmen erfolgt nicht mehr. Dies hat den positiven Effekt, dass über die Befestigungspunkte Gehäusebauteil - Hilfsrahmen geringere Kräfte und Momente zu übertragen sind, mit der Folge, dass der Hilfsrahmen leichter dimensioniert werden kann.

Gemäß einer alternativen Anordnung ist das das einteilige Gehäusebauteil, die im Gehäusebauteil gelagerten Drehaktuatoren und das im Gehäusebauteil integrierte Steuergerät umfassende einheitliche Modul wieder an einem Hilfsrahmen angeordnet. Hierbei umfasst der Hilfsrahmen zwei in Fahrzeuglängsrichtung ausgerichtete Längsträger und eine in Fahrzeugquerrichtung ausgerichtete hintere Quertraverse. Das gemeinsame Gehäusebauteil ist vorzugsweise in Form eine Querstrebe an beiden Längsträgern befestigt. Das Gehäusebauteil ist dabei derart dimensioniert, dass der Hilfsrahmen unter Wegfall der vorderen Quertraverse ausbildbar ist. Durch die Anordnung, Ausgestaltung und Dimensionierung ist in vorteilhafter Weise sichergestellt, dass das Gehäusebauteil zusätzlich die Funktion einer Hilfsrahmenquertraverse übernimmt. Hierdurch ist eine besonders gewichtsreduzierte Gestaltung des Hilfsrahmens gewährleistet.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: die für eine aktive Radaufhängung notwendigen Komponenten Drehaktuatoren, Drehstäbe und Steuergerät in einem ersten Beispiel;
- Fig. 2: die Komponenten aus Fig. 1 im montierten Zustand an einem Hilfsrahmen;
- Fig. 3: die Komponenten für eine aktive Radaufhängung in einer ersten Ausführungsform;
- Fig. 4: die Komponenten aus Fig. 3 im montierten Zustand an einem Hilfsrahmen;
- Fig. 5: die Komponenten für eine aktive Radaufhängung in einer weiteren Ausführungsform;
- Fig. 6: eine alternative Ausführungsform der in Fig. 5 dargestellten Komponenten;
- Fig. 7: die Komponenten aus Fig. 5 im montierten Zustand an einem Hilfsrahmen, und
- Fig. 8: die Komponenten aus Fig. 5 im montierten Zustand an einem anders ausgebildeten Hilfsrahmen..

In der nachfolgenden Beschreibung und in den Figuren wird zur Vermeidung von Wiederholungen gleicher Bauteile und Komponenten mit gleichen Bezugszeichen gekennzeichnet, sofern keine weitere Differenzierung erforderlich oder sinnvoll ist.

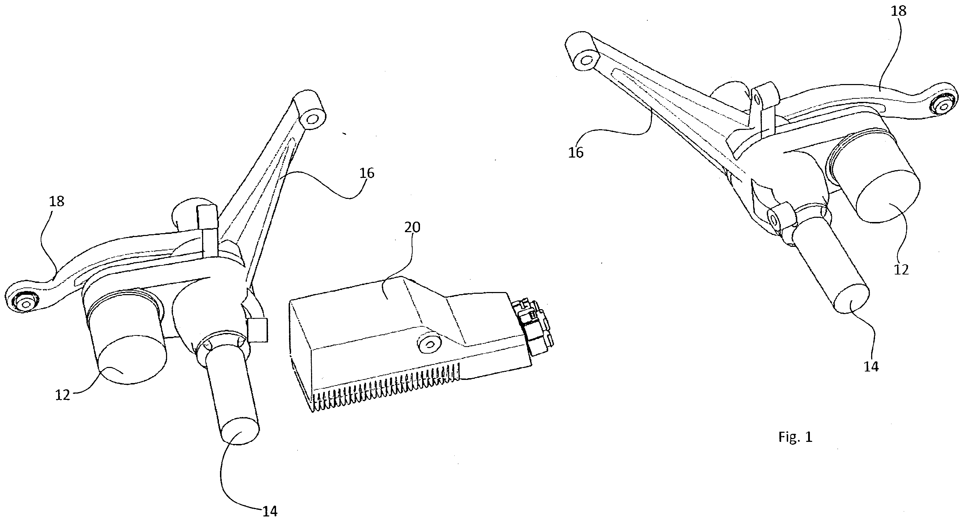

Fig. 1 zeigt in einem ersten Beispiel die einem Rad einer Achse zuzuordnenden Komponenten zur Realisierung einer - nachfolgend insgesamt mit der Bezugsziffer 10 bezeichneten - aktiven Radaufhängung.

Jedem Rad ist ein Drehaktuator 12 mit Drehstab 14 zugeordnet. Die Einheit aus Drehaktuator 12 mit Drehstab 14 weist weiterhin mindestens eine Strebe 16 zur Momentenabstützung sowie ein Hebelelement 18 auf. Über das Hebelelement 18 stehen die Drehstäbe 14 jeweils mit dem Rad in Wirkverbindung, so dass durch eine entsprechende Verstellung der Drehstäbe 14 die Wankbewegung, Aufbaubewegung, Kurvenneigung, Nickbewegung des Kraftfahrzeuges beeinflussbar ist. Weiterhin ist ein Steuergerät 20 dargestellt, über das die Drehaktuatoren 12 gezielt ansteuerbar sind.

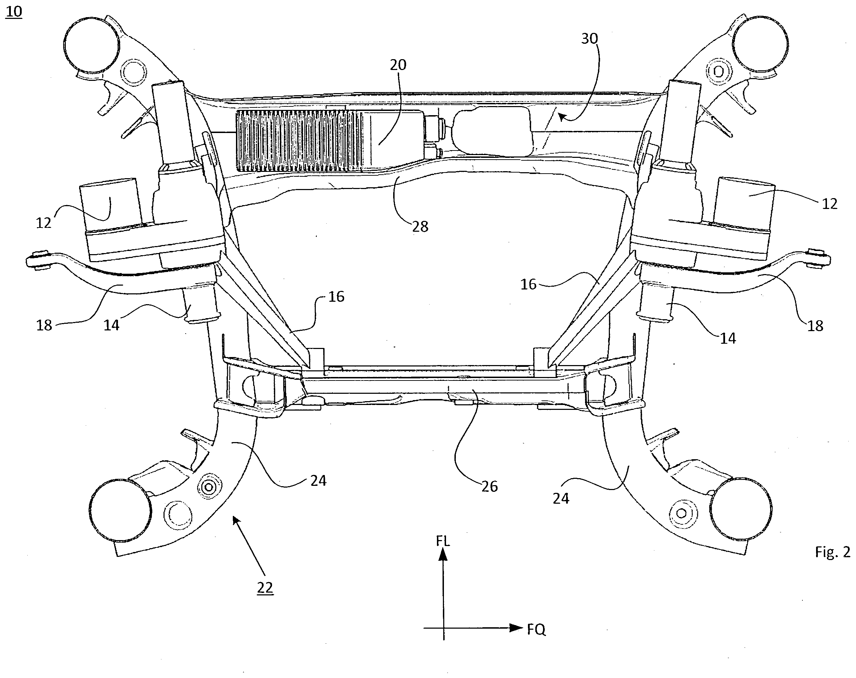

Fig. 2 zeigt in einer Ansicht von unten einen insgesamt mit der Bezugsziffer 22 bezeichneten Hilfsrahmen, an dem die Komponenten aus Fig. 1 montiert sind. Aus Gründen der Übersichtlichkeit wurde auf die Darstellung von Radführungselementen sowie den Rädern verzichtet.

Der Hilfsrahmen 22 weist zwei in Fahrzeuglängsrichtung FL ausgerichtete Längsträger 24 sowie eine in Fahrzeugquerrichtung FQ ausgerichtete hintere Quertraverse 26 sowie in Fahrzeuglängsrichtung FQ ausgerichtete vordere Quertraverse 28 auf.

Wie Fig. 2 deutlich zu entnehmen ist, weist hierbei die vordere Quertraverse 28 ein im Querschnitt offenes Profil auf, so dass in Kraftfahrzeugquerrichtung FQ betrachtet eine Stabilisatorgasse 30 ausgebildet ist. Bei einer herkömmlichen Radaufhängung ist in dieser Stabilisatorgasse 30 ein konventioneller Drehstabilisator angeordnet.

Wie Fig. 2 weiter zu entnehmen ist, sind die beiden Drehaktuatoren 12 sowie die Drehstäbe 14 der Drehaktuatoren 12 in Kraftfahrzeuglängsrichtung FL ausgebildet. Das Steuergerät 20, über das die Ansteuerung der beiden Drehaktuatoren 12 erfolgt, ist bauraumsparend in der Stabilisatorgasse 30 angeordnet. Über die im Wesentlichen in Kraftfahrzeugquerrichtung FQ ausgerichteten Strebe 16, die jeweils an der hinteren Quertraverse 26 angelenkt sind, ist eine Momentenabstützung der Drehaktuatoren 12 gewährleistet.

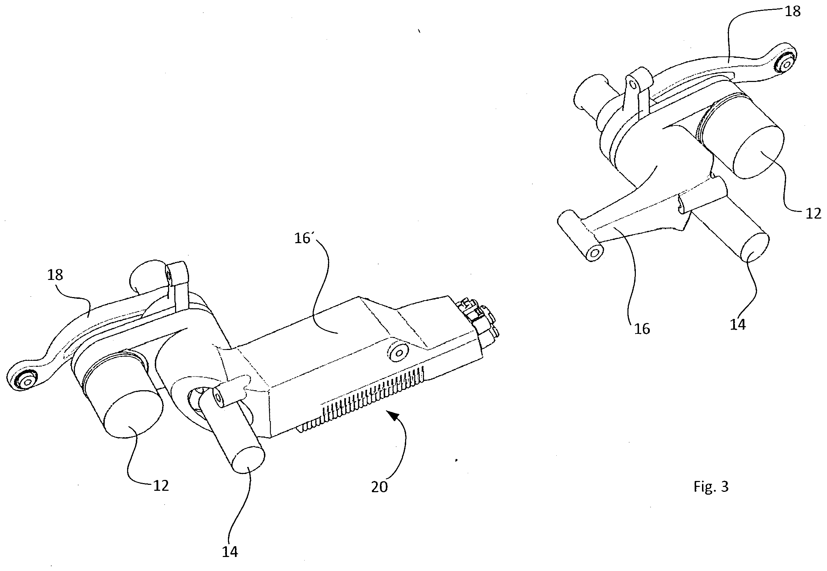

Fig. 3 zeigt eine weitere Ausgestaltung der für die aktive Radaufhängung notwendigen Komponenten Drehaktuaren 12, Drehstäbe 14 und Steuergerät 20. Während die rechts dargestellte Einheit aus Drehaktuator 12, Drehstab 14, Hebelelement 18 und Strebe 16 im Wesentlichen der Anordnung der oben unter Fig. 1 beschriebenen entspricht, ist - wie Fig. 3 zu entnehmen ist - bei an dem anderen, gegenüberliebenden Drehaktuator 12 das Steuergerät 20 in die Strebe 16' integriert. Hierzu ist die Strebe 16' gehäuseförmig ausgebildet, sodass entsprechend Bauraum zur Integration des Steuergeräts 20 zur Verfügung steht.

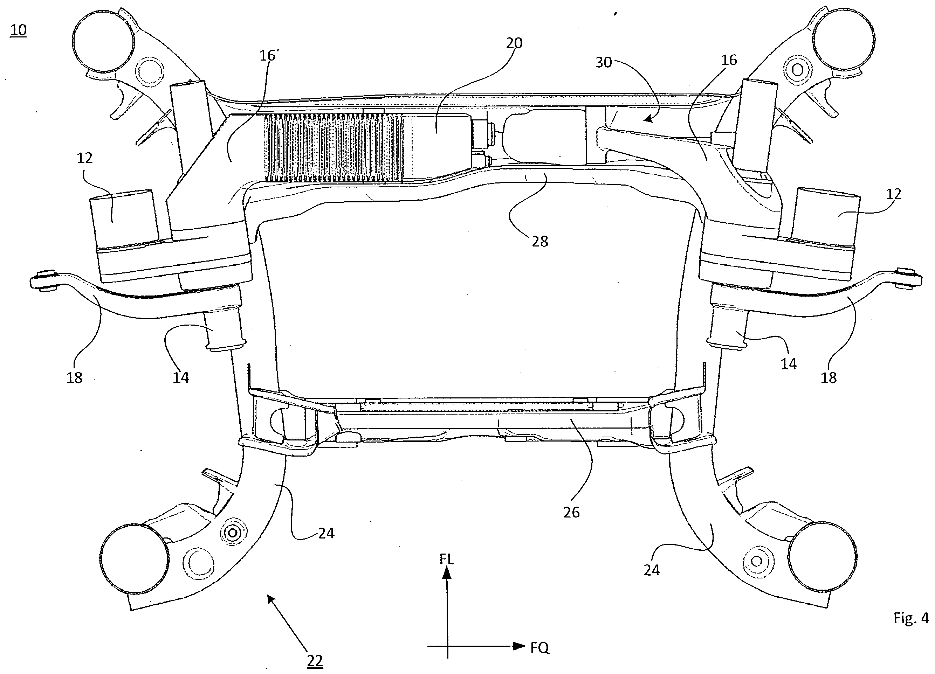

Fig. 4 zeigt die Komponenten aus Fig. 3 im montierten Zustand an einem Hilfsrahmen 22. Der Hilfsrahmen 22 entspricht dabei dem in Fig. 2 dargestellten, insbesondere weist die vordere Quertraverse 28 wieder eine Stabilisatorgasse 30 auf. Im montierten Zustand sind dabei die gehäuseförmig ausgebildete Strebe 16' mit integrierten Steuergerät 20 des einen Drehaktuators 12 sowie die Strebe 16 des anderen Drehaktuators 12 in der Stabilisatorgasse 30 angeordnet.

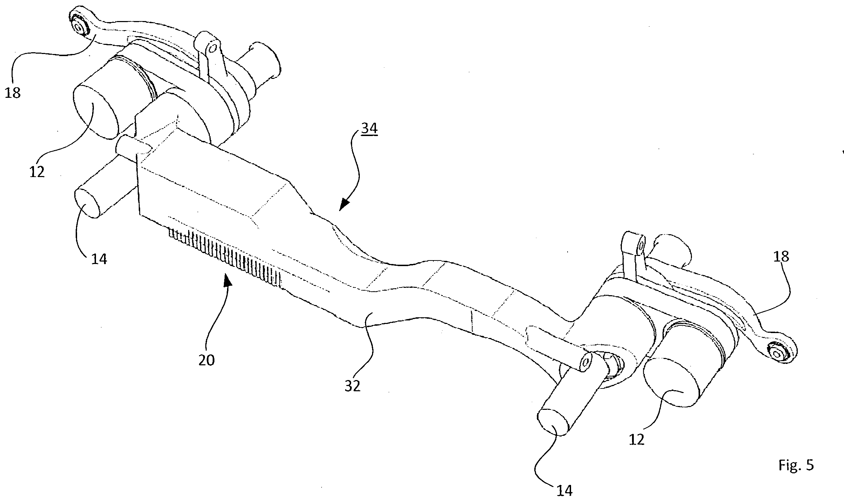

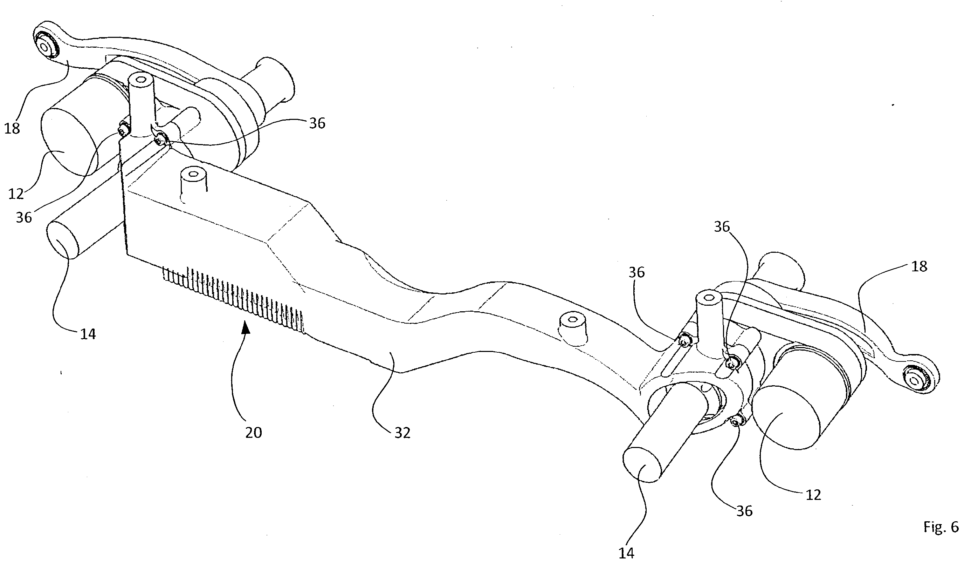

Bei der in Fig. 5 dargestellten Ausgestaltung der Komponenten Drehaktuaren 12, Drehstäbe 14 und Steuergerät 20, bilden die beiden Streben 16 ein einteiliges, in Kraftfahrzeugquerrichtung ausgerichtetes Gehäusebauteil 32. Neben der Lagerung der Drehaktuaren 12 ist auch das Steuergerät 20 in dieses Gehäusebauteil 32 integriert, sodass einteiliges Gehäusebauteil 32 und die Drehaktuatoren 12 eine einteilige Baueinheit 34 bilden
Gemäß Fig. 6 bilden die beiden Streben wieder ein einheitliches Gehäusebauteil 32, in das das Steuergerät 32 integriert ist. Im Gegensatz zu Fig. 5 sind die Drehaktuatoren 12 jedoch nicht unmittelbar im Gehäusebauteil 32 gelagert, d.h. Drehaktuatoren 12 und Gehäusebauteil 32 bilden keine einteilige Baueinheit, sondern die Gehäuse der Drehaktuatoren 12 sind über Befestigungsmittel 36 an das Gehäusebauteil 32 befestigt. Wie Fig. 6 weiter zu entnehmen ist, sind dabei die Befestigungsmittel 36 in Richtung der Drehstäbe 14 der Drehaktuatoren 12 ausgerichtet.

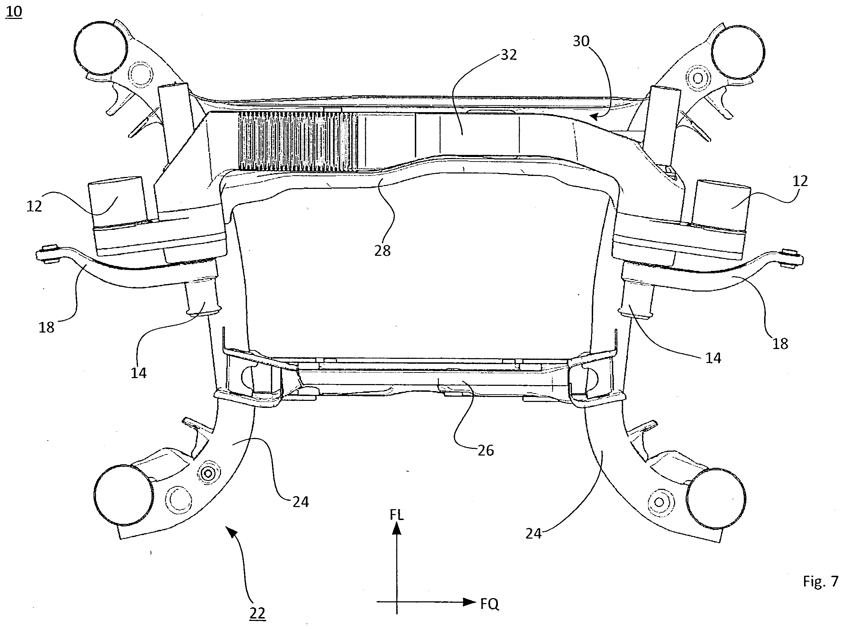

Fig. 7 zeigt die Komponenten aus Fig. 5 im montierten Zustand an einem Hilfsrahmen 22, der dem bereits beschrieben Hilfsrahmen entspricht. D.h. der Hilfsrahmen 22 weist wiederum zwei in Fahrzeuglängsrichtung FL ausgerichtete Längsträger 24 sowie zwei in Fahrzeugquerrichtung FQ ausgerichtete Quertraverse 26, 28, wobei die vordere Quertraverse 28 einen offenen Querschnitt aufweist, so dass in Kraftfahrzeugquerrichtung FQ eine Stabilisatorgasse 30 gebildet ist. Über das Gehäusebauteil 32 sind die Kraftfahrzeuglängsrichtung FL ausgerichteten Drehaktuatoren 12, Drehstäbe 14 sowie das in Kraftfahrzeugquerrichtung FQ ausgerichtete Steuergerät 20 am Hilfsrahmen 22 befestigt. Das Gehäusebauteil 32 ist hierbei so dimensioniert, dass es in den offenen Querschnitt der vorderen Quertraverse 28, also in der Stabilisatorgasse 30, positionierbar und befestigbar ist.

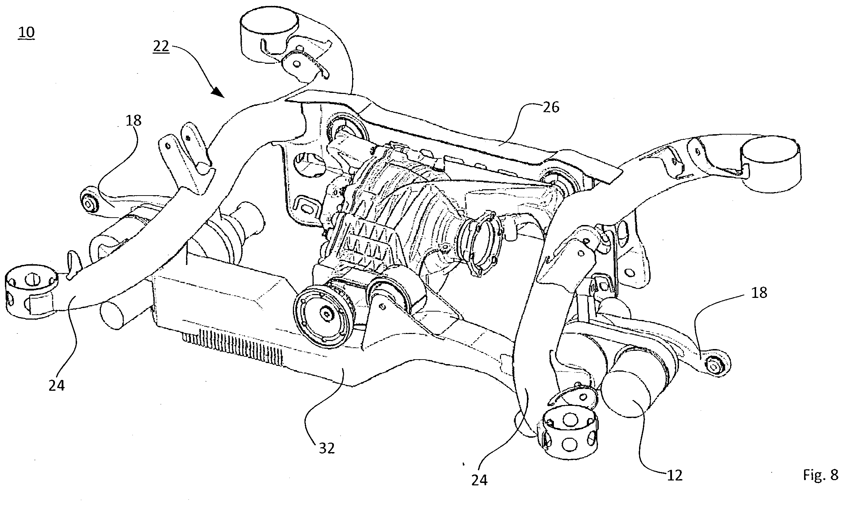

Im Gegensatz dazu ist gemäß der in Fig. 8 dargestellten Ausführungsform der Hilfsrahmen 22 ohne vordere Quertraverse ausgebildet. Hierzu ist das in Kraftfahrzeugquerrichtung FQ ausgerichtete, an den Längsträgern 24 befestigte Gehäusebauteil 32 derart ausgebildet und dimensioniert, dass mittels des Gehäusebauteils 32 wirkende Kräfte und Momente mit aufgenommen werden können. Hierdurch ist gewährleistet, dass das Gehäusebauteil 32 die Funktion der vorderen Quertraverse übernimmt. D.h. der Hilfsrahmen 22 kann - wie in Fig. 7 gezeigt - ohne vordere Quertraverse ausgebildet werden.

### Bezugszeichenliste

- 10: aktive Radaufhängung
- 12: Drehaktuator
- 14: Drehstab
- 16: Strebe
- 16': gehäuseförmige Strebe
- 18: Hebelelement
- 20: Steuergerät
- 22: Hilfsrahmen
- 24: Längsträger
- 26: hintere Quertraverse
- 28: vordere Quertraverse
- 30: Stabilisatorgasse
- 32: Gehäusebauteil
- 34: einteilige Baueinheit umfassend Gehäusebauteil 32 und Drehaktuatoren 12
- 36: Befestigungsmittel

## Patentansprüche

1. Aktiv verstellbare Radaufhängung (10) für die Räder einer Achse eines Kraftfahrzeugs, bei der jedes Rad karosserieseitig über mehrere Radführungselemente angelenkt ist und jedes Rad mit einem karosserieseitig gelagerten, einen Drehstab (14) aufweisenden Drehaktuator (12) in Wirkverbindung steht, und bei der zur aktiven Verstellung die beiden Drehaktuatoren (12) über ein Steuergerät (20) ansteuerbar sind, wobei die Drehaktuatoren (12) sowie die Drehstäbe (14) der Drehaktuatoren (12) in Kraftfahrzeuglängsrichtung (FL) ausgerichtet sind und die Drehaktuatoren (12) jeweils mindestens eine in Kraftfahrzeugquerrichtung (FQ) ausgerichtete, Strebe (16, 16', 32) zur Momentenabstützung aufweisen, **dadurch gekennzeichnet, dass** die Strebe (16') eines Drehaktuators gehäuseförmig ausgebildet ist und dass das Steuergerät (20) in die gehäuseförmig ausgebildete Strebe (16') des einen Drehaktuators integriert ist.

2. Aktiv verstellbare Radaufhängung nach Anspruch 1, **dadurch gekennzeichnet, dass** ein Hilfsrahmen (22) vorgesehen ist, wobei der Hilfsrahmen (22) zwei in Fahrzeuglängsrichtung (FL) ausgerichtete Längsträger (24), eine in Fahrzeugquerrichtung (FQ) ausgerichtete hinteren Quertraverse (26) und eine in Fahrzeugquerrichtung (FQ) ausgerichtete vordere Quertraverse (28) umfasst, wobei die vordere Quertraverse (28) einen offenen Querschnitt aufweist, durch den eine in Kraftfahrzeugquerrichtung (FQ) ausgerichtete Stabilisatorgasse (30) gebildet ist, und dass die gehäuseförmig ausgebildete Strebe (16') des einen Drehaktuators (12), das darin integrierte Steuergerät (20) und die Strebe (16) des anderen Drehaktuators (12) in der Stabilisatorgasse (30) angeordnet sind.

3. Aktiv verstellbare Radaufhängung nach dem Oberbegriff des Anspruches 1, **dadurch gekennzeichnet, dass** die beiden Streben als ein einteiliges Gehäusebauteil (32) ausgebildet sind in das das Steuergerät (20) integriert ist.

4. Aktiv verstellbare Radaufhängung nach Anspruch 3, **dadurch gekennzeichnet, dass** das einteilige Gehäusebauteil (32) und die Drehaktuatoren (12) eine einteilige Baueinheit (34) bilden.

5. Aktiv verstellbare Radaufhängung nach Anspruch 3, **dadurch gekennzeichnet, dass** das einteilige Gehäusebauteil (32) und die Drehaktuatoren (12) mehrteilig ausgebildet sind, und die Drehaktuatoren (12) mittels Befestigungsmittel (36) am einteiligen Gehäusebauteil (32) befestigt sind.

6. Aktiv verstellbare Radaufhängung nach Anspruch 5, **dadurch gekennzeichnet, dass** die Befestigungsmittel (36) in einer Symmetrieebene der Drehaktuatoren (12) liegen und/oder senkrecht dazu stehen.

7. Aktiv verstellbare Radaufhängung nach einem der Ansprüche 3 bis 6, **dadurch gekennzeichnet, dass** ein Hilfsrahmen (22) vorgesehen ist, wobei der Hilfsrahmen (22) zwei in Fahrzeuglängsrichtung (FL) ausgerichtete Längsträger (24), eine in Fahrzeugquerrichtung (FQ) ausgerichtete hinteren Quertraverse (26) und eine in Fahrzeugquerrichtung (FQ) ausgerichtete vordere Quertraverse (28) umfasst, wobei die vordere Quertraverse (28) einen offenen Querschnitt aufweist, durch den eine in Kraftfahrzeugquerrichtung (FQ) ausgerichtete Stabilisatorgasse (30) gebildet ist, und dass das Gehäusebauteil (32) mit integriertem Steuergerät (20) in der Stabilisatorgasse (20) angeordnet ist.

8. Aktiv verstellbare Radaufhängung nach einem der Ansprüche 3 bis 6, **dadurch gekennzeichnet, dass** ein Hilfsrahmen (22) vorgesehen ist, wobei der Hilfsrahmen (22) zwei in Fahrzeuglängsrichtung (FL) ausgerichtete Längsträger (24) und eine in Fahrzeugquerrichtung (FQ) ausgerichtete hinteren Quertraverse (16) umfasst, und dass das Gehäusebauteil (32) mit integriertem Steuergerät (20) an den beiden Längsträgern (24) befestigt ist, wobei das Gehäusebauteil (32) derart dimensioniert ist, dass der Hilfsrahmen (22) unter Wegfall einer Quertraverse ausbildbar ist.

## Claims

1. Actively adjustable wheel suspension (10) for the wheels of an axle of a motor vehicle in which each wheel is articulated via a plurality of wheel guiding elements on the side of the vehicle body and each wheel is in operative connection with a rotary actuator (12) comprising a torsion bar (14) mounted on the side of the vehicle body and in which the two rotary actuators (12) can be actuated via a control device (20) for active adjustment, wherein the rotary actuators (12) and the torsion bars (14) of the rotary actuators (12) are aligned in the longitudinal direction of the motor vehicle (FL) and the rotary actuators (12) each comprise at least one strut (16, 16', 32) aligned in the transverse direction of the motor vehicle (FQ) for torque support, **characterised in that** the strut (16') of one rotary actuator is designed in the form of a housing and **in that** the control device (20) is integrated into the strut (16') of the rotary actuator designed in the form of a housing.

2. Actively adjustable wheel suspension according to claim 1, **characterised in that** a subframe (22) is provided, wherein the subframe (22) comprises two longitudinal beams (24) aligned in the longitudinal direction of the motor vehicle (FL), a rear transverse beam (26) aligned in the transverse direction of the motor vehicle (FQ) and a front transverse beam (28) aligned in the transverse direction of the motor vehicle (FQ), wherein the front transverse beam (28) comprises an open cross-section through which is formed a stabiliser channel (30) aligned in the transverse direction of the motor vehicle (FQ) and **in that** the strut (16') of one rotary actuator (12) designed in the form of a housing, the control device (20) integrated therein and the strut (16) of the other rotary actuator (12) are arranged in the stabiliser channel (30).

3. Actively adjustable wheel suspension according to the preamble of claim 1, **characterised in that** the two struts are designed as a single-part housing component (32) into which the control device (20) is integrated.

4. Actively adjustable wheel suspension according to claim 3, **characterised in that** the single-part housing component (32) and the rotary actuators (12) form a single-part unit (34).

5. Actively adjustable wheel suspension according to claim 3, **characterised in that** the single-part housing component (32) and the rotary actuators (12) are designed in multiple parts and the rotary actuators (12) are fastened to the single-part housing component (32) by means of fastening means (36).

6. Actively adjustable wheel suspension according to claim 5, **characterised in that** the fastening means (36) are located in a symmetry plane of the rotary actuators (12) and/or are perpendicular thereto.

7. Actively adjustable wheel suspension according to any one of claims 3 to 6, **characterised in that** a subframe (22) is provided, wherein the subframe (22) comprises two longitudinal beams (24) aligned in the longitudinal direction of the motor vehicle (FL), a rear transverse beam (26) aligned in the transverse direction of the motor vehicle (FQ) and a front transverse beam (28) aligned in the transverse direction of the motor vehicle (FQ), wherein the front transverse beam (28) comprises an open cross-section through which is formed a stabiliser channel (30) aligned in the transverse direction of the motor vehicle (FQ) and **in that** the housing component (32) with integrated control device (20) is arranged in the stabiliser channel (20).

8. Actively adjustable wheel suspension according to any one of claims 3 to 6, **characterised in that** a subframe (22) is provided wherein the subframe (22) comprises two longitudinal beams (24) aligned in the longitudinal direction of the motor vehicle (FL) and a rear transverse beam (16) aligned in the transverse direction of the motor vehicle (FQ) and **in that** the housing component (32) with integrated control device (20) is fastened to the two longitudinal beams (24), wherein the housing component (32) is dimensioned such that the subframe (22) can be designed without a transverse beam.

## Revendications

1. Suspension de roue (10) activement réglable pour les roues d'un essieu d'un véhicule automobile, où chaque roue est articulée côté carrosserie par l'intermédiaire de plusieurs éléments de guidage de roue et chaque roue est en liaison active avec un actionneur rotatif (12) présentant une barre de torsion (14), logé côté carrosserie, et où pour le réglage actif, les deux actionneurs rotatifs (12) sont commandables par l'intermédiaire d'un appareil de commande (20), dans laquelle les actionneurs rotatifs (12) ainsi que les barres de torsion (14) des actionneurs rotatifs (12) sont orientés dans la direction longitudinale du véhicule automobile (FL) et les actionneurs rotatifs (12) présentent respectivement au moins une entretoise (16, 16', 32) orientée dans la direction transversale du véhicule automobile (FQ) pour l'appui de couple, **caractérisée en ce que** l'entretoise (16') d'un actionneur rotatif est réalisée en forme de boîtier et que l'appareil de commande (20) est intégré dans l'entretoise (16'), réalisée en forme de boîtier, de l'un actionneur rotatif.

2. Suspension de roue activement réglable selon la revendication 1, **caractérisée en ce qu'**un faux-châssis (22) est prévu, dans laquelle le faux-châssis (22) comprend deux poutres longitudinales (24) orientées dans la direction longitudinale du véhicule (FL), une traverse arrière (26) orientée dans la direction transversale du véhicule (FQ) et une traverse avant (28) orientée dans la direction transversale du véhicule (FQ), dans laquelle la traverse avant (28) présente une section transversale ouverte par laquelle un passage de stabilisateur (30) orienté dans la direction transversale du véhicule automobile (FQ) est formé, et que l'entretoise (16'), réalisée en forme de boîtier, de l'un actionneur rotatif (12), l'appareil de commande (20) intégré dedans et l'entretoise (16) de l'autre actionneur rotatif (12) sont disposés dans le passage de stabilisateur (30).

3. Suspension de roue activement réglable selon le préambule de la revendication 1, **caractérisée en ce que** les deux entretoises sont réalisées comme un composant de boîtier (32) en une partie, dans lequel l'appareil de commande (20) est intégré.

4. Suspension de roue activement réglable selon la revendication 3, **caractérisée en ce que** le composant de boîtier (32) en une partie et les actionneurs rotatifs (12) forment une unité de construction (34) en une partie.

5. Suspension de roue activement réglable selon la revendication 3, **caractérisée en ce que** le composant de boîtier (32) en une partie et les actionneurs rotatifs (12) sont réalisés en plusieurs parties, et les actionneurs rotatifs (12) sont fixés au moyen de moyens de fixation (36) au composant de boîtier (32) en une partie.

6. Suspension de roue activement réglable selon la revendication 5, **caractérisée en ce que** les moyens de fixation (36) se trouvent dans un plan de symétrie des actionneurs rotatifs (12) et/ou sont perpendiculaires à celui-ci.

7. Suspension de roue activement réglable selon l'une quelconque des revendications 3 à 6, **caractérisée en ce qu'**un faux-châssis (22) est prévu, dans laquelle le faux-châssis (22) comprend deux poutres longitudinales (24) orientées dans la direction longitudinale du véhicule (FL), une traverse arrière (26) orientée dans la direction transversale du véhicule (FQ) et une traverse avant (28) orientée dans la direction transversale du véhicule (FQ), dans laquelle la traverse avant (28) présente une section transversale ouverte par laquelle un passage de stabilisateur (30) orienté dans la direction transversale du véhicule automobile (FQ) est formé, et que le composant de boîtier (32) avec un appareil de commande (20) intégré est disposé dans le passage de stabilisateur (20).

8. Suspension de roue activement réglable selon l'une quelconque des revendications 3 à 6, **caractérisée en ce qu'**un faux-châssis (22) est prévu, dans laquelle le faux-châssis (22) comprend deux poutres longitudinales (24) orientées dans la direction longitudinale du véhicule (FL) et une traverse arrière (16) orientée dans la direction transversale du véhicule (FQ), et que le composant de boîtier (32) avec un appareil de commande (20) intégré est fixé aux deux poutres longitudinales (24), dans laquelle le composant de boîtier (32) est dimensionné de telle manière que le faux-châssis (22) soit réalisable en supprimant une traverse.
